# EUROPEAN PATENT APPLICATION

(11) **EP 3 905 663 A1**
(43) Date of publication of application: **03.11.2021**
(21) Application number: 19902454.8
(22) Date of filing: 19.12.2019
(51) Int. Cl.: H04N 5/278, G06F 40/58

(54) **MULTI-SUBTITLE DISPLAY METHOD, INTELLIGENT TERMINAL AND STORAGE MEDIUM**

(30) Priority: 24.12.2018 CN 201811585018
(71) Applicant: Shenzhen TCL New Technology Co., Ltd, Shenzhen, Guangdong 518052 (CN)
(72) Inventor: LI, Qilang, Shenzhen, Guangdong 518052 (CN)
(74) Representative: GLP S.R.L.
(86) International application number: PCT/CN2019/126441
(87) International publication number: WO 2020/135192

(57) **Abstract**

Disclosed are a multi-subtitle display method, an intelligent terminal, and a storage medium. The method comprises: acquiring a video frame after video decoding, and extracting subtitle information from the video frame, wherein the subtitle information comprises an original subtitle and coordinate information of the original subtitle in the video frame; translating the original subtitle into a corresponding target subtitle; and when the video frame is played, displaying, according to the coordination information, the target subtitle in a display area except a display area of the original subtitle. In the present disclosure, a target subtitle desired to be watched by a user is displayed in other areas of a screen by means of avoiding a display area of the content of an original subtitle, and a subtitle, suitable for the user, from among various kinds of subtitles is played according to a choice of the user, such that the user can conveniently watch a program by means of the subtitle suitable for the user.

## Description

### PRIORITY

This application claims priority to Chinese Patent Application No. 201811585018.7, filed on 24.12.2018, the content of all of which is incorporated herein by reference.

### FIELD OF THE INVENTION

The present disclosure relates to the technical field of computer technology, and more particularly, to a multi-subtitle display method, an intelligent terminal and a storage medium.

### BACKGROUND

With the development and popularization of the Internet technology, various intelligent terminals develop rapidly. For example, Internet TV is no longer a new thing and it is more and more popular because of rich program resources and convenient & fast broadcasting methods. The internet TV has had a greater impact on the traditional way of broadcasting TV programs, bringing people more colorful information and TV programs.

Due to the high mobility of people at present, the languages spoken by users within a certain receival range may be diverse. However, the subtitles played with TV programs are relatively single, and generally only subtitles in one language may be provided, which does not leave the opportunity for users to choose, and may result in the users being unable to choose suitable subtitles.

The current video subtitle display method is mainly to extract a subtitle content from a corresponding subtitle file and present a corresponding subtitle segment to a corresponding video segment according to the timeline. In addition, the current video subtitle display method is to encode the subtitle information with the video image and make the subtitle information a part of the video. The two are presented together when the video is played, decoded, and displayed. However, if a target subtitles are to be loaded, such as a target subtitle, they may overlap with the subtitle in the source video file, causing visual confusion and affecting experience for the users.

Therefore, the current technology needs to be improved and developed.

### BRIEF SUMMARY OF THE DISCLOSURE

According to the above described defects, the present disclosure provides a multi-subtitle display method, an intelligent terminal, and a storage medium, in order to translate an original subtitle to a target subtitle selected by the user, display the target subtitle the user would like to watch at a same time by avoiding a display area of a content of the original subtitle, so a mutual interference between two kinds of subtitle is avoided. Playing a subtitle suitable for the user from various subtitles according to the selection of the user, it would be convenient for the user to watch a program with the subtitle suitable for the user.

The present disclosure provides a solution to solve the technical problem as follows.

A multi-subtitle display method, wherein the multi-subtitle display method comprising:
obtaining a video frame after video decoding, and extracting subtitle information in the video frame, the subtitle information comprises an original subtitle and coordinate information of the original subtitle in the video frame;
translating the original subtitle into a corresponding target subtitle;
displaying the target subtitle in a display area other than a display area of the original subtitle according to the coordinate information when playing the video frame.

The multi-subtitle display method, wherein the step of translating the original subtitle into a corresponding target subtitle comprising:
translating the original subtitle into the target subtitle through a translation application installed locally on a terminal.

The multi-subtitle display method, wherein the step of translating the original subtitle into a corresponding target subtitle comprising:
uploading the original subtitle to a server, for the server to translate the original subtitle into the target subtitle.

The multi-subtitle display method, wherein the uploading the original subtitle to a server for the server to translate the original subtitle into the target subtitle comprising:
uploading all subtitle information acquired from each video frame to the server, and receiving a selection instruction from a user to select a target subtitle language, the target subtitle language is selected from a plurality of pre-provided languages, and based on the pre-provided language selected, the server translates all the subtitle information in real time to obtain a text information corresponding to the target subtitle language.

The multi-subtitle display method, wherein the uploading all subtitle information acquired from each video frame to the server, and receiving a selection instruction from a user to select a target subtitle language, the target subtitle language is selected from a plurality of pre-provided languages, and based on the pre-provided language selected, the server translates all the subtitle information in real time to obtain a text information corresponding to the target subtitle language comprising:
receiving a subtitle selection request input by the user, and sending the subtitle selection request to the server, the server stores various subtitle files corresponding to a TV programs played by a smart television, selecting a subtitle file pointed to by a selected subtitle from the various subtitle files after receiving the subtitle selection request, and receiving the subtitle file selected by the server according to the selected subtitle, the server prestores various subtitle files corresponding to a program, selecting a subtitle file pointed to by the selected subtitle from the various subtitle files after receiving the subtitle selection request, and translating a text information into a text information of the target subtitle according to the subtitle file.

The multi-subtitle display method, wherein the multi-subtitle display method further comprising:
uploading all subtitle information to a third-party server that provides online translation service by the server and translating directly to obtain a text information in a target language appointed by the user through the third-party server.

The multi-subtitle display method, wherein before translating the original subtitle into a corresponding target subtitle, further comprising:
receiving a selection instruction from a user to select a target subtitle language, and determining a language corresponding to the target subtitle according to the selection instruction.

The multi-subtitle display method, wherein the step of receiving a selection instruction from a user to select a target subtitle language comprising:
displaying a subtitle list containing multiple types of subtitle on an interface for the user to select when it is detected that the user needs to select the target subtitle, and receiving the selection instruction from the user to select the target subtitle language.

The multi-subtitle display method, wherein the displaying a subtitle list containing multiple types of subtitle on an interface for the user to select when it is detected that the user needs to select the target subtitle, and receiving the selection instruction from the user to select the target subtitle language comprising:
receiving a pre-selection command input by the user, displaying a subtitle list containing multiple types of subtitle according to the pre-selection command, receiving a selection command input by the user, and generating a selection instruction containing the selected subtitle according to the selection command.

The multi-subtitle display method, wherein the selection instruction comprising a selected subtitle reflects user wish.

The multi-subtitle display method, wherein the displaying the target subtitle in a display area other than a display area of the original subtitle according to the coordinate information when playing the video frame comprising:
obtaining the coordinate information of the original subtitle in the video frame and the target subtitle translated;
displaying the target subtitle in a display area other than a display area of the original subtitle according to the coordinate information in a process of playing the video frame.

The multi-subtitle display method, wherein the multi-subtitle display method further comprising:
receiving a switch instruction from the user to switch the target subtitle in real time and switching a current target subtitle to a newly selected target subtitle according to the switch instruction.

The multi-subtitle display method, wherein the multi-subtitle display method further comprising:
displaying the target subtitle in a display area other than a display area of the original subtitle in a manner of: displaying the target subtitle in a horizontal manner or displaying the target subtitle in a vertical manner.

An intelligent terminal, wherein the intelligent terminal comprising: a memory, a processor, and a multi-subtitle display program stored in the memory and capable of running on the processor, and the multi-subtitle display program is executed by the processor to implement steps of the multi-subtitle display method described above.

A storage medium, wherein the storage medium stores a multi-subtitle display program, and the multi-subtitle display program is executed by a processor to implement steps of the multi-subtitle display method described above.

The present disclosure provides a multi-subtitle display method, an intelligent terminal and a storage medium, the method comprising: obtaining a video frame after video decoding, and extracting subtitle information in the video frame, the subtitle information comprises an original subtitle and coordinate information of the original subtitle in the video frame; translating the original subtitle into a corresponding target subtitle; displaying the target subtitle in a display area other than a display area of the original subtitle according to the coordinate information when playing the video frame. By avoiding the display area of a content of the original subtitle, the present disclosure displays the target subtitle the user would like to watch in other area of the screen at the same time, and play the subtitle suitable for the user according to the user selection, it is convenient for the user to watch a program through the subtitle suitable for the user.

### BRIEF DESCRIPTION OF THE DRAWINGS

FIG. 1 illustrates a flow chart of an embodiment of the multi-subtitle display method provided by the present disclosure;
FIG. 2 illustrates a schematic diagram on extracting video frame after video decoding in an embodiment of the multi-subtitle display method provided by the present disclosure;
FIG. 3 illustrates a schematic diagram of translating the original subtitle in the FIG. 2 to a target subtitle language in an embodiment of the multi-subtitle display method provided by the present disclosure;
FIG. 4 illustrates a flow chart of a step S30 in an embodiment of the multi-subtitle display method provided by the present disclosure.
FIG. 5 illustrates a schematic diagram of displaying two kinds of subtitle in the video in an embodiment of the multi-subtitle display method provided by the present disclosure.
FIG. 6 illustrates a schematic diagram of an operating environment in an embodiment of the intelligent terminal provided by the present disclosure.

### DETAILED DESCRIPTION OF EMBODIMENTS

In order to make the purpose, technical solution and the advantages of the present disclosure clearer and more explicit, further detailed descriptions of the present disclosure are stated here, referencing to the attached drawings and some embodiments of the present disclosure. It should be understood that the detailed embodiments of the disclosure described herein are used to explain the present disclosure only, instead of limiting the present disclosure.

### Embodiment 1

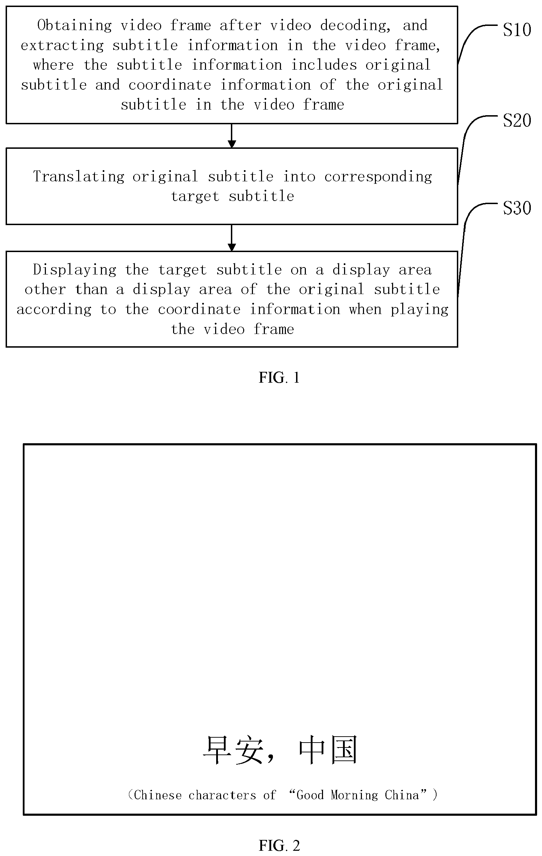

the multi-subtitle display method according to an embodiment of the present disclosure, as shown in FIG. 1, the multi-subtitle display method comprises the following steps:

Step S10: obtaining a video frame after video decoding, and extracting subtitle information in the video frame, the subtitle information comprises an original subtitle and coordinate information of the original subtitle in the video frame.

For example, when a user is watching a TV program, if a displayed subtitle is not suitable for the user to watch, there is a need to display a target subtitle (subtitle of other languages). By obtaining a video frame after video decoding and extracting a subtitle information in the video frame, as shown in FIG. 2, a certain frame in a certain video of a smart TV is extracted, a content of the scene is not displayed here, any scene is acceptable. Only an original subtitle " 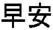 , 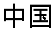 ("Good Morning, China" in Chinese characters)" in the current video frame is shown, the original subtitle here are only as an example, and can be other subtitle in the video.

Extracting subtitle information (text information) in each video frame which includes original subtitle and coordinate information of the original subtitle in the video frame, such as " 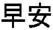 , 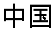 ("Good Morning, China" in Chinese characters)" in FIG. 2, analyzing and recording a coordinate information (x1, y1) of a content of the subtitle, for example the coordinate information (x1, y1) of " 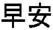 , 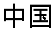 ("Good Morning, China" in Chinese characters)" in Figure 2.

Step S20: translating the original subtitle into a corresponding target subtitle.

That is, before the original subtitle are translated into a corresponding target subtitle, a selection instruction from the user to select a target subtitle language is received, and a language corresponding to the target subtitle is determined according to the selection instruction. Which means when it is detected that the user needs to select a target subtitle, a subtitle list containing multiple kinds of subtitle is displayed on an interface for the user to select, and a selection instruction for the user to select the target subtitle language is received.

For example, it can be implemented by the following steps: receiving a pre-selection command input by the user, displaying a subtitle list containing multiple types of subtitle according to the pre-selection command, receiving a selection command input by the user, and generating a selection instruction containing the selected subtitle according to the selection command. By receiving the selection instruction of the target subtitle, the subtitle selection instruction contains a selected subtitle that reflects the user's wish, for example, if the target subtitle language is English, the selected subtitle that the user wants to see is English.

In the present disclosure, there are mainly two ways to translate the original subtitle into the corresponding target subtitle. One is to translate the original subtitle into the target subtitle through a translation application (for example, locally installed translation software) installed locally on the terminal, another one is to upload the original subtitle to a server, so that the server can translate the original subtitle into the target subtitle.

For example, translate the original subtitle into the target subtitle by the server may be performed by the following process:

uploading all subtitle information acquired from each video frame to the server, and receiving a selection instruction from the user to select a target subtitle language, the target subtitle language is selected from a plurality of pre-provided languages, and based on the pre-provided language selected, the server translates all the subtitle information in real time to obtain a text information corresponding to the target subtitle language.

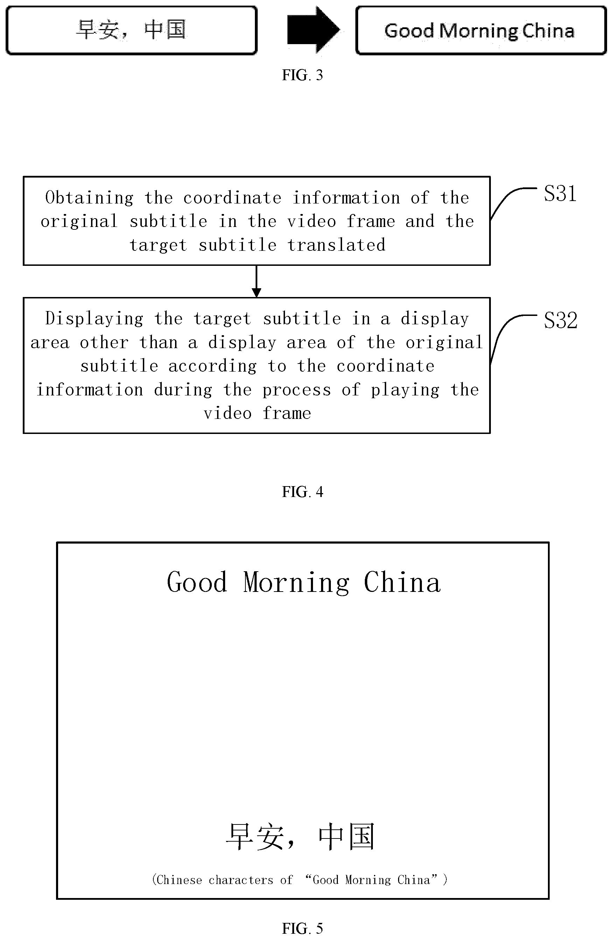

Furthermore, the present disclosure can translate all subtitle information in real time to obtain text information corresponding to the target subtitle language through the server according to the target subtitle language selected by the user, and can also upload the text information to a third-party server that provides online translation service and translate directly through the third-party server to obtain the text information of the target language appointed by the user, that is, an information of the original subtitle needs to be translated into a subtitle information in the language selected by the user. For example, a conversion of the subtitle information in FIG. 2 is shown in Figure 3. " 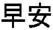 , 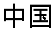 " in Chinese characters (means "Good Morning China") are translated to "Good Morning China".

First, receiving the pre-selection command input by the user. The command indicates that the user wants to select a subtitle suitable for the user. After receiving the pre-selection command, a subtitle list is displayed on a display interface. The subtitle list includes multiple kinds of subtitle, including Chinese, English, French, German, or languages for minority. If the user selects further currently, then receiving the selection command input by the user. After the selection command is received, a subtitle selection instruction containing a selected subtitle is generated according to the selection command, and the selected subtitle is the subtitle pointed to by the above selection command, and a subtitle selection request is sent to the server.

On the basis of the original subtitle, it can only be converted into a certain selective language each time. For example, a video itself is in Chinese, and the user can only choose to translate the video into one of English, Korean, Japanese, French and other languages each time , so that subtitles in two languages can be displayed on the screen at a same time.

Further, after receiving the subtitle selection request input by the user, the subtitle selection request is sent to a server of a smart TV playback system (for example, a subtitle server). The server stores various subtitle files corresponding to TV programs played by the smart TV, a subtitle file pointed to by a selected subtitle is selected from the various subtitle files after receiving the subtitle selection request, and receiving the subtitle file selected by the server according to the selected subtitle, that is, the server prestores various subtitle files corresponding to a program, selecting a subtitle file pointed to by the selected subtitle from the various subtitle files after receiving the subtitle selection request, and translating a text information into a text information of the target subtitle according to the subtitle file.

Step S30: displaying the target subtitle in a display area other than a display area of the original subtitle according to the coordinate information when playing the video frame.

The process please refer to FIG. 4, which illustrates a flow chart of a step S30 in an embodiment of the multi-subtitle display method provided by the present disclosure.

As shown in FIG. 4, the step S30 comprises:
S31. Obtaining the coordinate information of the original subtitle in the video frame and the target subtitle translated;
S32. Displaying the target subtitle in a display area other than a display area of the original subtitle according to the coordinate information during the process of playing the video frame.

According to the coordinate information of a content of the original subtitle, such as the coordinate information (x1, y1) of " 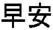 , 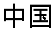 ("Good Morning, China" in Chinese characters)" in FIG. 2, to avoid a coordinate area (x1, y1) of the display area of the original subtitle, and display a second kind of text information (target subtitles) in other positions, such as a display area of location(x2, y2). For example, in FIG. 5, " 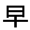 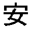 , 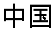 " (original subtitle) in Chinese characters (means "Good Morning China") and "Good Morning China" (target subtitle) are displayed at the same time in the video screen, FIG. 5 displays "Good Morning China" (target subtitles) at the top of the screen, and " 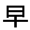 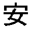 , 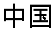 " (original subtitle) in Chinese characters (means "Good Morning China") is still kept at the bottom of the video screen. The two kinds of subtitle can be displayed in the video screen while not interfere with each other at the same time. After the text information of the target subtitle sent by the server is received and the display area is allocated, the text information of the target subtitle can be played together with the program currently being played.

In addition, when the target subtitle currently selected by the user is played, a switching instruction from the user to switch the target subtitle can also be received in real time, and switch a current target subtitle to a newly selected target subtitle according to the switching instruction, that is, according to the user's willing to switch target subtitle in real time.

Further, a display manner of the text information of the target subtitle on the screen includes horizontal display and vertical display, that is, the display manner of the target subtitle in a display area other than a display area of the original subtitle includes: displaying the target subtitle in a horizontal manner or displaying the target subtitle in a vertical manner. For example, the display manner in FIG. 5 is horizontal display (horizontally displayed on the top of the video screen). Of course, it can also be displayed vertically, such as displayed vertically on a left or right side of the video screen.

### Embodiment 2

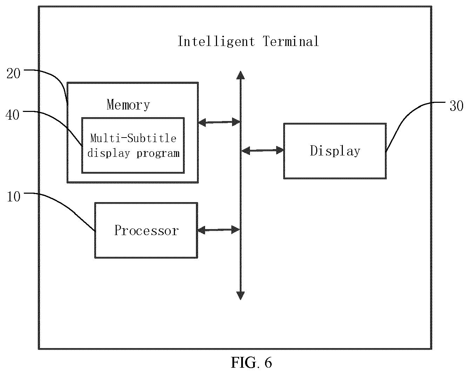

Further, as shown in FIG. 6, based on the above-mentioned multi-subtitle display method, the present disclosure also provides an intelligent terminal (such as smart television, smart tablet, smart phone, and so on) correspondingly, the intelligent terminal comprising: a processor 10, a memory 20, a display 30. FIG. 6 only shows part of the components of the intelligent terminal, but it should be understood that it is not required to implement all the components shown, and more or fewer components may be implemented instead.

In some embodiments, the memory 20 may be an internal storage unit of the intelligent terminal, such as a hard disk or memory 20 of the intelligent terminal. In other embodiments, the memory 20 may also be an external storage device of the intelligent terminal, such as a plug-in hard disk equipped on the intelligent terminal, a smart media card (SMC), a secure digital (SD) card, a flash card, etc.. Further, the memory 20 may also comprise both an internal storage unit of the intelligent terminal and an external storage device. The memory 20 is used to store application software and various types of data installed in the intelligent terminal, such as the program code installed in intelligent terminal, etc. The memory 20 can also be used to temporarily store data that has been output or will be output. In an embodiment, a multi-subtitle display program 40 is stored in the memory 20, and the multi-subtitle display program 40 can be executed by the processor 10, so as to implement the multi-subtitle display method in the present application.

The processor 10 in some embodiments may be a central processing unit (CPU), a microprocessor or other data processing chips, for running the program code or processing data stored in the memory 20, such as executing the multi-subtitle display method and the like.

In some embodiments, the display 30 may be an LED display, a liquid crystal display, a touch control liquid crystal display, an OLED (Organic Light-Emitting Diode) touch device and the like. The display 30 is used for displaying information on an intelligent terminal and for displaying a visualized user interface. The components 10-30 of the intelligent terminal communicate with each other via a system bus.

In an embodiment, when a processor 10 executes a multi-subtitle display program 40 in the memory 20, implementing the following steps:
obtaining a video frame after video decoding, and extracting subtitle information in the video frame, the subtitle information comprises an original subtitle and coordinate information of the original subtitle in the video frame;
translating the original subtitle into a corresponding target subtitle;
displaying the target subtitle in a display area other than a display area of the original subtitle according to the coordinate information when playing the video frame.

The step of translating the original subtitle into a corresponding target subtitle comprising:
translating the original subtitle into the target subtitle through a translation application installed locally on a terminal.

The step of translating the original subtitle into a corresponding target subtitle comprising:
uploading the original subtitle to a server, for the server to translate the original subtitle into the target subtitle.

The uploading the original subtitle to a server for the server to translate the original subtitle into the target subtitle comprising:
uploading all subtitle information acquired from each video frame to the server, and receiving a selection instruction from a user to select a target subtitle language, the target subtitle language is selected from a plurality of pre-provided languages, and based on the pre-provided language selected, the server translates all the subtitle information in real time to obtain a text information corresponding to the target subtitle language.

The uploading all subtitle information acquired from each video frame to the server, and receiving a selection instruction from a user to select a target subtitle language, the target subtitle language is selected from a plurality of pre-provided languages, and based on the pre-provided language selected, the server translates all the subtitle information in real time to obtain a text information corresponding to the target subtitle language comprising:
receiving a subtitle selection request input by the user, and sending the subtitle selection request to the server, the server stores various subtitle files corresponding to a TV programs played by a smart television, selecting a subtitle file pointed to by a selected subtitle from the various subtitle files after receiving the subtitle selection request, and receiving the subtitle file selected by the server according to the selected subtitle, the server prestores various subtitle files corresponding to a program, selecting a subtitle file pointed to by the selected subtitle from the various subtitle files after receiving the subtitle selection request, and translating a text information into a text information of the target subtitle according to the subtitle file.

The multi-subtitle display method further comprising:
uploading all subtitle information to a third-party server that provides online translation service by the server and translating directly to obtain a text information in a target language appointed by the user through the third-party server.
before translating the original subtitle into a corresponding target subtitle, further comprising:
receiving a selection instruction from a user to select a target subtitle language, and determining a language corresponding to the target subtitle according to the selection instruction.

The step of receiving a selection instruction from a user to select a target subtitle language comprising:
displaying a subtitle list containing multiple types of subtitle on an interface for the user to select when it is detected that the user needs to select the target subtitle, and receiving the selection instruction from the user to select the target subtitle language.

The displaying a subtitle list containing multiple types of subtitle on an interface for the user to select when it is detected that the user needs to select the target subtitle, and receiving the selection instruction from the user to select the target subtitle language comprising:

receiving a pre-selection command input by the user, displaying a subtitle list containing multiple types of subtitle according to the pre-selection command, receiving a selection command input by the user, and generating a selection instruction containing the selected subtitle according to the selection command.

The selection instruction comprising a selected subtitle reflects user wish.

The displaying the target subtitle in a display area other than a display area of the original subtitle according to the coordinate information when playing the video frame comprising:

obtaining the coordinate information of the original subtitle in the video frame and the target subtitle translated;

displaying the target subtitle in a display area other than a display area of the original subtitle according to the coordinate information in a process of playing the video frame.

The multi-subtitle display method further comprising:
receiving a switch instruction from the user to switch the target subtitle in real time, and switching a current target subtitle to a newly selected target subtitle according to the switch instruction.

The multi-subtitle display method further comprising:
displaying the target subtitle in a display area other than a display area of the original subtitle in a manner of: displaying the target subtitle in a horizontal manner or displaying the target subtitle in a vertical manner.

### Embodiment 3

The present disclosure further provides a storage medium, wherein the storage medium stores a multi-subtitle display program, and the multi-subtitle display program is executed by a processor to implement the steps of the multi-subtitle display method described above.

Above all, the present disclosure provides a multi-subtitle display method, an intelligent terminal and a storage medium, the method comprising: obtaining a video frame after video decoding, and extracting subtitle information in the video frame, the subtitle information comprises an original subtitle and coordinate information of the original subtitle in the video frame; translating the original subtitle into a corresponding target subtitle; displaying the target subtitle in a display area other than a display area of the original subtitle according to the coordinate information when playing the video frame. By avoiding the display area of a content of the original subtitle, the present disclosure displays the target subtitle the user would like to watch in other area of the screen at the same time, and play the subtitle suitable for the user according to the user selection, it is convenient for the user to watch a program through the subtitle suitable for the user.

Certainly, the ordinary skill in the art can understand that all or part of the processes in the above-mentioned embodiment methods can be implemented by instructing relevant hardware (such as a processor, a controller, etc.) through a computer program, and the program can be stored in a computer readable storage medium, and the program can include a flow as described in the embodiment of each method. The storage medium can be a memory, a magnetic disc, an optical disc, etc.

It should be understood that, the application of the present disclosure is not limited to the above examples listed. Ordinary technical personnel in this field can improve or change the applications according to the above descriptions, all of these improvements and transforms should belong to the scope of protection in the appended claims of the present disclosure.

## Claims

1. A multi-subtitle display method, wherein the multi-subtitle display method comprising:
obtaining a video frame after video decoding, and extracting subtitle information in the video frame, the subtitle information comprises an original subtitle and
coordinate information of the original subtitle in the video frame;
translating the original subtitle into a corresponding target subtitle;
displaying the target subtitle in a display area other than a display area of the original subtitle according to the coordinate information when playing the video frame.

2. The multi-subtitle display method according to claim 1, wherein the step of translating the original subtitle into a corresponding target subtitle comprising:
translating the original subtitle into the target subtitle through a translation application installed locally on a terminal.

3. The multi-subtitle display method according to claim 1, wherein the step of translating the original subtitle into a corresponding target subtitle comprising:
uploading the original subtitle to a server, for the server to translate the original subtitle into the target subtitle.

4. The multi-subtitle display method according to claim 3, wherein the uploading the original subtitle to a server for the server to translate the original subtitle into the target subtitle comprising:
uploading all subtitle information acquired from each video frame to the server, and
receiving a selection instruction from a user to select a target subtitle language, the target subtitle language is selected from a plurality of pre-provided languages, and based on the pre-provided language selected, the server translates all the subtitle information in real time to obtain a text information corresponding to the target subtitle language.

5. The multi-subtitle display method according to claim 4, wherein the uploading all subtitle information acquired from each video frame to the server, and receiving a selection instruction from a user to select a target subtitle language, the target subtitle language is selected from a plurality of pre-provided languages, and based on the pre-provided language selected, the server translates all the subtitle information in real time to obtain a text information corresponding to the target subtitle language comprising:
receiving a subtitle selection request input by the user, and sending the subtitle selection request to the server, the server stores various subtitle files corresponding to a TV programs played by a smart television, selecting a subtitle file pointed to by a selected subtitle from the various subtitle files after receiving the subtitle selection request, and receiving the subtitle file selected by the server according to the selected subtitle, the server prestores various subtitle files corresponding to a program, selecting a subtitle file pointed to by the selected subtitle from the various subtitle files after receiving the subtitle selection request, and translating a text information into a text information of the target subtitle according to the subtitle file.

6. The multi-subtitle display method according to claim 3, wherein the multi-subtitle display method further comprising:
uploading all subtitle information to a third-party server that provides online translation service by the server and translating directly to obtain a text information in a target language appointed by the user through the third-party server.

7. The multi-subtitle display method according to claim 1, wherein before translating the original subtitle into a corresponding target subtitle, further comprising:
receiving a selection instruction from a user to select a target subtitle language, and
determining a language corresponding to the target subtitle according to the selection instruction.

8. The multi-subtitle display method according to claim 7, wherein the step of receiving a selection instruction from a user to select a target subtitle language comprising:
displaying a subtitle list containing multiple types of subtitle on an interface for the user to select when it is detected that the user needs to select the target subtitle, and
receiving the selection instruction from the user to select the target subtitle language.

9. The multi-subtitle display method according to claim 8, wherein the displaying a subtitle list containing multiple types of subtitle on an interface for the user to select when it is detected that the user needs to select the target subtitle, and receiving the selection instruction from the user to select the target subtitle language comprising:
receiving a pre-selection command input by the user, displaying a subtitle list containing multiple types of subtitle according to the pre-selection command,
receiving a selection command input by the user, and generating a selection instruction containing the selected subtitle according to the selection command.

10. The multi-subtitle display method according to claim 9, wherein the selection instruction comprising a selected subtitle reflects user wish.

11. The multi-subtitle display method according to claim 2 or 3, wherein the displaying the target subtitle in a display area other than a display area of the original subtitle according to the coordinate information when playing the video frame comprising:
obtaining the coordinate information of the original subtitle in the video frame and the target subtitle translated;
displaying the target subtitle in a display area other than a display area of the original subtitle according to the coordinate information in a process of playing the video frame.

12. The multi-subtitle display method according to claim 11, wherein the multi-subtitle display method further comprising:
receiving a switch instruction from the user to switch the target subtitle in real time,
and switching a current target subtitle to a newly selected target subtitle according to the switch instruction.

13. The multi-subtitle display method according to claim 1, wherein the multi-subtitle display method further comprising:
displaying the target subtitle in a display area other than a display area of the original subtitle in a manner of: displaying the target subtitle in a horizontal manner or displaying the target subtitle in a vertical manner.

14. An intelligent terminal, wherein the intelligent terminal comprising: a memory, a processor, and a multi-subtitle display program stored in the memory and capable of running on the processor, and the multi-subtitle display program is executed by the processor to implement steps of the multi-subtitle display method according to any one of claims 1-13.

15. A storage medium, wherein the storage medium stores a multi-subtitle display program, and the multi-subtitle display program is executed by a processor to implement steps of the multi-subtitle display method according to any one of claims 1-13.
